# FASCICULE DE BREVET EUROPEEN

(11) **EP 4 308 799 B1**
(45) Date de publication et mention de la délivrance du brevet: **20.11.2024**
(21) Numéro de dépôt: 22713702.3
(22) Date de dépôt: 08.03.2022
(51) Int. Cl.: F01D 25/16, F02C 7/06, F04D 29/056, F16C 27/04, F16F 15/023

(54) **DISPOSITIF DE CENTRAGE ET DE GUIDAGE D'UN ARBRE DE TURBOMACHINE D'AÉRONEF**
ZENTRIER- UND FÜHRUNGSVORRICHTUNG FÜR EINE FLUGZEUG-TURBOMASCHINENWELLE
DEVICE FOR CENTERING AND GUIDING A SHAFT OF AN AIRCRAFT TURBOMACHINE

(30) Priorité: 18.03.2021 FR 2102710
(43) Date de publication de la demande: 24.01.2024
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BARET, Emmanuel Fabrice Marie, 77550 MOISSY-CRAMAYEL (FR); BECOULET, Julien Fabien Patrick, 77550 MOISSY-CRAMAYEL (FR); TAN-KIM, Alexandre Jean-Marie, 77550 MOISSY-CRAMAYEL (FR)
(74) Mandataire: Gevers & Orès
(86) Numéro de dépôt international: PCT/FR2022/050411
(87) Numéro de publication internationale: WO 2022/195194

(56) Documents cités:
- CN-A- 103 244 276
- FR-A1- 2 519 101
- FR-A1- 3 091 902
- GB-A- 2 310 258
- US-A- 3 357 757
- US-A1- 2016 177 765

## Description

### Domaine technique de l'invention

La présente invention concerne un dispositif de centrage et de guidage d'un arbre de turbomachine d'aéronef, ainsi qu'une turbomachine d'aéronef.

### Arrière-plan technique

Une turbomachine d'aéronef comprend des arbres, tels qu'un arbre basse pression et un arbre haute pression, qui sont centrés et guidés en rotation par des paliers, en général à roulement et par exemple à rouleaux ou billes. Un palier à roulement comprend des bagues externe et interne entre lesquelles sont disposés les rouleaux ou les billes. La bague interne est solidaire de l'arbre à guider et la bague externe est fixée à un support de palier qui est une pièce rigide de stator de la turbomachine.

Un arbre de turbomachine peut atteindre un régime très important, typiquement entre 2 000 et 30 000 tours par minute. De tels régimes induisent des excitations des modes propres des arbres qui peuvent avoir des effets néfastes sur le moteur si le mode répond fortement.

Afin de contrôler la position du mode, les paliers sont en général associés à des cages souples qui permettent d'assouplir les conditions aux limites de l'arbre et qui abaissent la fréquence du mode propre. Cela peut permettre d'abaisser le mode en dessous de la plage de fonctionnement.

Dans la présente demande, on entend par « cage souple », un organe ou un assemblage qui assure une liaison souple entre la bague externe d'un palier et son support. La souplesse de cette cage est en général assurée par une capacité de déformation élastique de cette cage, par exemple en torsion et/ou en flexion. Pour conférer cette capacité, la cage comprend au moins une série de colonnettes réparties autour de l'axe du palier et s'étendant sensiblement parallèlement à cet axe.

Il existe à ce jour deux technologies de cage souple pour palier.

La première technologie décrite dans les documents FR-A1-3 009 843 et FR-A1-3 078 370 est une cage souple monobloc. Une cage de ce type comprend en général une paroi cylindrique interne à laquelle la bague externe du palier est fixée ou intégrée, et une paroi cylindrique externe ou une bride de fixation au support de palier. Les parois sont reliées entre elles par une série de colonnettes ayant une forme générale en C ou deux séries de colonnettes s'étendant l'une autour de l'autre et reliées ensemble. Les colonnettes et les parois sont alors formées d'une seule pièce.

Une seconde technologie décrite dans le document FR-A1-3 009 843 concerne une cage obtenue par assemblage de colonnettes indépendantes avec le support et la bague. Chaque colonnette comporte un corps de forme allongée et relié à une première extrémité longitudinale de fixation au support et à une seconde extrémité longitudinale de fixation à la bague.

Dans la technique actuelle, le corps a en section transversale une forme circulaire c'est-à-dire une forme axisymétrique (la forme en section du corps de la colonnette présente une symétrie par rapport à l'axe longitudinal de ce corps). La cage souple équipée de ces colonnettes a également une forme axisymétrique et sa raideur est identique quelle que soit la direction transversale des efforts de sollicitation de la cage.

L'état de la technique comprend également des technologies décrites par FR-A1-3 091 902, FR-A1-2 519 101, GB-A-2 3100 258, US-A1-2016/177765, US-A-3 357 757 ou CN-B-103 244 276.

L'invention propose un perfectionnement à cette seconde technologie, qui permet notamment d'adapter la raideur de la cage souple en fonction de la direction de sollicitation.

### Résumé de l'invention

L'invention propose un dispositif de centrage et de guidage d'un arbre de turbomachine d'aéronef, ce dispositif comportant :
- une bague externe d'un palier à roulement, cette bague s'étendant autour d'un axe principal et comprenant des orifices disposés autour de cet axe et orientés parallèlement à cet axe,
- un support annulaire de palier s'étendant autour de l'axe principal et au moins en partie autour de la bague, ce support comprenant des orifices et des ouvertures disposés autour de cet axe et orientés parallèlement à cet axe, et
- une série de colonnettes de liaison de la bague au support, ces colonnettes étant réparties autour de l'axe principal et ayant des axes d'allongement sensiblement parallèles à l'axe principal, chacune de ces colonnettes comportant un corps comprenant une première extrémité longitudinale engagée dans un des orifices de la bague et une seconde extrémité longitudinale engagée dans un des orifices du support, le corps de chacune des colonnettes traversant une des ouvertures du support,
caractérisé en ce que certaines des colonnettes, appelées premières colonnettes, ont leurs corps qui traversent avec un premier jeu positif et un second jeu quasi nul des premières ouvertures, ledit premier jeu étant orienté dans au moins une première direction radiale par rapport audit axe d'allongement, et ledit second jeu étant orienté dans au moins une seconde direction radiale par rapport audit axe d'allongement, différente de la première direction, lesdits premier et second jeux étant configurés pour que le dispositif ait des amplitudes de déplacement différentes dans au moins deux directions perpendiculaires audit axe principal.

Quelle que soit la position des colonnettes autour de leurs axes respectifs, un dispositif selon la technique antérieure équipée de colonnettes à corps axisymétriques, possède une même raideur dans toutes les directions transversales (perpendiculaires à l'axe). Cela signifie que la raideur du dispositif dans une première direction perpendiculaire à l'axe (par exemple dans un plan horizontal) est identique à la raideur du dispositif dans une seconde direction perpendiculaire à l'axe (par exemple dans un plan vertical). L'invention permet au contraire de conférer au dispositif des raideurs différentes selon les directions transversales de sollicitation. En effet, les jeux avec des orientations radiales différentes entre les colonnettes et les ouvertures du support permettent à certaines colonnettes de répondre différemment aux sollicitations par rapport à d'autres colonnettes. Avantageusement, le dispositif comprend deux raideurs différentes en directions transversales. Il est en effet particulièrement intéressant pour stabiliser un arbre de fournir des raideurs différentes dans deux directions transversales et perpendiculaires entre elles car cela permet de repousser la vitesse d'apparition d'instabilités de l'arbre guidé par le dispositif. Grâce à la formation de la cage souple par assemblage de colonnettes, l'invention est avantageuse car elle permet une multitude de configurations possibles en limitant le coût du dispositif. Dans le cadre d'une cage souple monobloc par exemple, un changement de caractéristique impliquerait la réalisation d'une nouvelle pièce. En phase de développement cela impliquerait des coûts et des délais supplémentaires, surtout en cas d'erreur de dimensionnement de la pièce prototype. Le délai de réalisation d'une nouvelle pièce serait incompressible.

Il est, en outre, entendu que l'invention couvre toutes les combinaisons de forme pour les sections transversales des colonnettes et des ouvertures du support. Ces formes peuvent être choisies de manière non limitative parmi une forme générale cylindrique, oblongue, elliptique, rectangulaire ou trapézoïdale.

Le dispositif selon l'invention peut comprendre une ou plusieurs des caractéristiques ci-dessous, prises isolément les unes avec les autres ou en combinaison les unes avec les autres :
- les première et seconde directions sont perpendiculaires entre elles ;
- la première direction et la seconde direction sont orientées tangentiellement ou de manière normale par rapport à une circonférence centrée sur l'axe principal ;
- d'autres colonnettes, appelées secondes colonnette ont leurs corps qui traversent des secondes ouvertures avec un troisième jeu orienté selon la seconde direction, ledit troisième jeu étant différent, de préférence sensiblement supérieur, aux premier et second jeux des premières colonnettes dans les premières ouvertures ;
- les premières colonnettes sont alternées avec les secondes colonnettes autour de l'axe ;
- les corps des colonnettes ont une forme générale cylindrique ;
- les premières ouvertures ont en section une forme oblongue ou en elliptique et les secondes ouvertures ont en section une forme circulaire ;
- les premières ouvertures sont orientées de façon à ce qu'elles présentent une forme allongée dans une même direction ;
- les ouvertures sont ménagées dans une paroi annulaire du support ;
- la bague externe comprend une surface cylindrique externe définissant avec une surface cylindrique interne du support un espace annulaire de formation d'un film d'huile d'amortissement.

L'invention concerne également une turbomachine d'aéronef, comportant au moins un dispositif tel que décrit dans ce qui précède.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] La figure 1 est une vue schématique en coupe axiale et en perspective d'un dispositif de guidage et de centrage d'un palier de turbomachine d'aéronef, selon la technique antérieure ;
[Fig.2] La figure 2 est une vue schématique en coupe axiale d'un autre dispositif de guidage et de centrage d'un palier de turbomachine d'aéronef, selon la technique antérieure ;
[Fig.3] La figure 3 est une vue très schématique en coupe transversale d'un support d'un dispositif de guidage et de centrage d'un palier de turbomachine d'aéronef selon une forme de réalisation de l'invention ;
[Fig.4] La figure 4 est une vue schématique en coupe axiale du dispositif de de la figure 3 selon l'axe de coupe I-I;
[Fig.5] La figure 5 est une vue schématique en coupe axiale du dispositif de de la figure 3 selon l'axe de coupe II-II; et
[Fig.6] La figure 6 est une vue schématique en coupe axiale du dispositif de de la figure 3 selon l'axe de coupe III-III.

### Description détaillée de l'invention

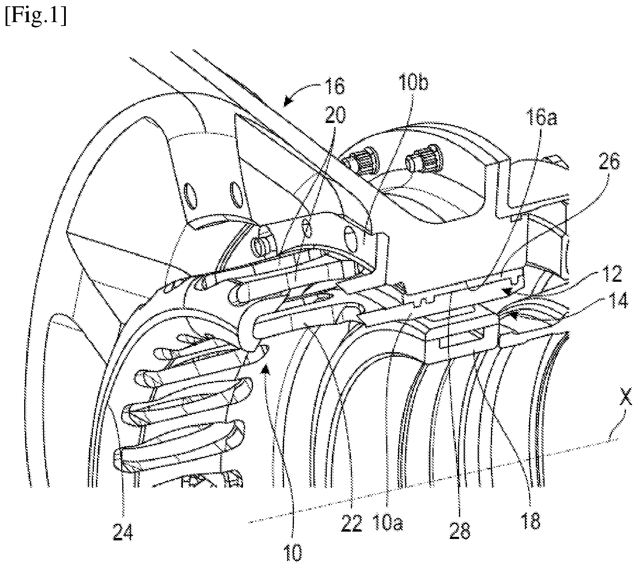

On se réfère d'abord à la figure 1 qui représente une première technologie de cage souple monobloc 10 selon la technique antérieure.

La cage souple 10 assure la liaison d'une bague externe 12 d'un palier à roulement 14 à un support annulaire 16 de ce palier 14.

Le palier 14 comporte, en plus de la bague externe 12, une bague interne 18 qui est solidaire d'un arbre de la turbomachine qui n'est pas représenté. Les bagues 12, 18 définissent un chemin de roulement de rouleaux dans l'exemple représenté.

La bague externe 12 est ici intégrée à une paroi cylindrique interne 10a de la cage 10 qui comprend une bride annulaire 10b radialement externe de fixation au support 16 par des moyens du type vis-écrou non représentés.

La cage 10 comprend ici deux séries de colonnettes 20, 22, respectivement radialement interne et externe par rapport à l'axe X du palier 14 et de l'arbre qu'il guide.

Les colonnettes 20, 22 sont réparties autour de l'axe X et s'étendent parallèlement à cet axe. Les colonnettes 20 s'étendent autour des colonnettes 22 et ont une première de leurs extrémités longitudinales qui est reliée à la bride 10b, et une seconde de leurs extrémités longitudinales qui est reliée aux autres colonnettes 22 par une portion annulaire 24 à section en C de la cage 10. Les colonnettes 22 s'étendent depuis la paroi 10a, dans le prolongement de celle-ci, jusqu'à cette portion 24.

Le support 16 fait partie d'un stator de la turbomachine et a ici une forme générale sensiblement tronconique. A sa périphérie interne, il comprend une surface cylindrique interne 16a de frettage d'un anneau 26 qui s'étend autour de la paroi 10a de la cage et qui définit avec celle-ci un espace annulaire 28 alimenté en huile afin de former un film d'huile d'amortissement des vibrations transmises par le palier 14 en fonctionnement.

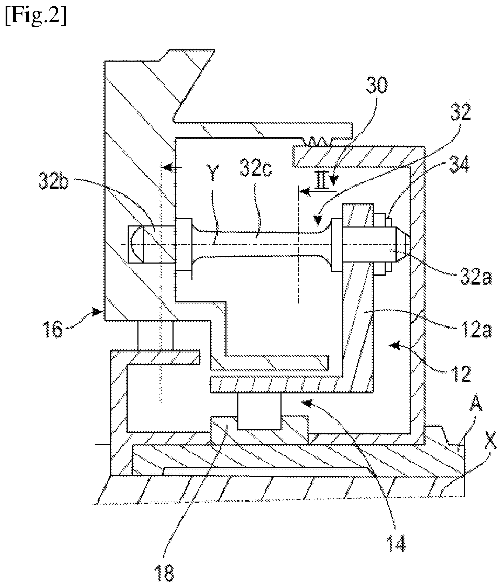

La figure 2 représente une seconde technologie de cage souple 30 à colonnettes 32 indépendantes, selon la technique antérieure.

La cage souple 30 assure également la liaison d'une bague externe 12 d'un palier à roulement 14 à un support annulaire 16 de ce palier 14.

Le palier 14 comporte, en plus de la bague externe 12, une bague interne 18 qui est solidaire d'un arbre A de la turbomachine. Les bagues 12, 18 définissent un chemin de roulement de rouleaux dans l'exemple représenté. La bague externe 12 comprend une bride annulaire 12a radialement externe qui comprend des orifices traversés par des extrémités 32a des colonnettes 32. Ces extrémités 32a sont filetées et reçoivent des écrous 34 serrés contre la bride 12a.

Les extrémités 32b opposées des colonnettes 32 sont fixées dans des trous du support 16.

La cage 30 comprend ici une série de colonnettes 32 qui sont réparties autour de l'axe X et s'étendent parallèlement à cet axe. Les colonnettes 32 comportent chacune un corps 32c qui a en section une forme circulaire, et donc symétriques par rapport à leur axe Y. Les colonnettes 32 sont également symétriques entre elles par rapport à l'axe X.

La cage souple 30 est ainsi « axisymétrique », et la raideur de la cage 10 et du palier 14 est donc la même dans toutes les directions transversales (perpendiculaires à l'axe X).

Cependant, d'un point de vue dynamique, il peut être intéressant d'avoir des raideurs différentes dans deux directions orthogonales : cela fournit un effet stabilisateur au dispositif en repoussant la vitesse d'apparition d'instabilités dues à l'amortissement interne de l'arbre.

En effet, en créant des souplesses différentes selon au moins deux directions, on observe l'apparition d'au moins deux modes contre un seul et unique mode dans le cas axisymétrique.

Dans le cas où la raideur radiale initiale de la cage souple axisymétrique K est telle que K1 <K<K2 où K1 et K2 sont les raideurs de la cage souple asymétrique respectivement dans les directions différentes 1 et 2 transverses à l'axe X, alors les fréquences des modes créés encadreront la fréquence du mode unique initial.

Dans ce cas, la fréquence d'apparition possible des instabilités est augmentée, ce qui permet de limiter le risque d'instabilité potentiellement dommageable pour le moteur.

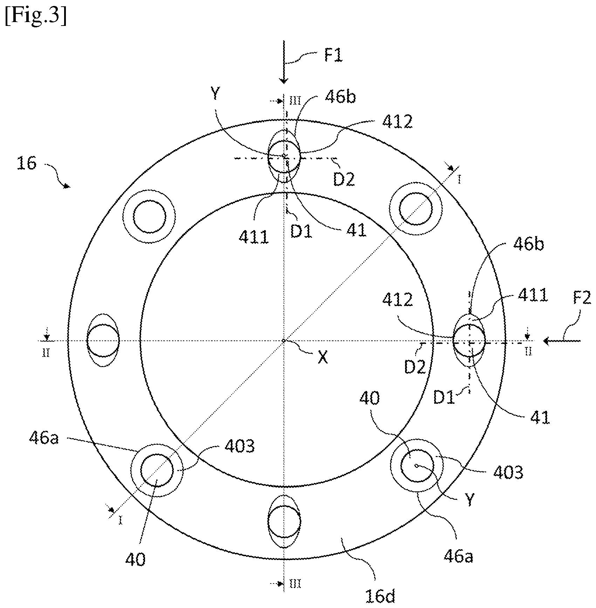

Le contrôle des déplacements de l'arbre selon l'azimut peut aussi être exploité pour améliorer les performances du moteur. En effet, sous chargement mécanique ou thermique la carcasse du moteur se déforme, ces distorsions génèrent des ouvertures et fermetures de jeux différentes selon l'azimut. Cela implique une dégradation de la performance du moteur qui pourrait être limitée si le déplacement dynamique est optimisé pour compenser une partie de la distorsion, par exemple en raidissant la cage souple dans la direction de la fermeture de jeu et en l'assouplissant dans la direction de l'ouverture de jeu. Les figures 3 à 6 illustrent un mode de réalisation d'un dispositif, selon l'invention, de centrage et de guidage d'un arbre de turbomachine d'aéronef qui permet de répondre à ce besoin.

Le dispositif comprend :
- une bague externe 12 d'un palier à roulement 14, cette bague s'étendant autour d'un axe principal X et comprenant des orifices 42a, 42b disposés autour de cet axe X et orientés parallèlement à cet axe X,
- un support annulaire 16 de palier s'étendant autour de l'axe principal X et au moins en partie autour de la bague 12, ce support 16 comprenant des orifices 44a, 44b et des ouvertures 46a, 46b disposés autour de cet axe X et orientés parallèlement à cet axe X, et
- une série de colonnettes 40, 41 de liaison de la bague 12 au support 16. Les colonnettes 40, 41 sont réparties autour de l'axe principal X et ont des axes d'allongement Y sensiblement parallèles à l'axe principal X. Avantageusement, chacune de ces colonnettes 40, 41 comporte un corps 40c, 41c, de forme générale cylindrique, comprenant une première extrémité 40a, 41a longitudinale et une seconde extrémité 40b, 41b longitudinale. Dans une autre forme de réalisation, non représentée, les corps 40c, 41c des colonnettes 40, 41 peuvent avoir une forme générale non cylindrique, par exemple oblongue. Chacune des premières extrémités 40a, 41a est dans un des orifices 42a, 42b de la bague 12 et chacune des secondes extrémités 40b, 41b est engagée dans un des orifices 44a, 44b du support 16. En particulier, les premières et secondes extrémités 40a, 41a, 40b, 41b peuvent être engagées sans jeux dans les orifices précités. Le corps 40c, 41c de chacune des colonnettes 40, 41 traverse une des ouvertures 46a, 46b du support 16. Ces ouvertures 46a, 46b peuvent être ménagées dans une paroi annulaire 16d, sensiblement radiale, du support 16. On comprend que les ouvertures 46a, 46b sont alignées axialement avec les orifices 42a, 42b de la bague 12 et les orifices 44a, 44b du support 16.

Des colonnettes 40, 41, on peut distinguer des premières colonnettes 41 et des secondes colonnettes 40. Des ouvertures 46a, 46b, on peut également distinguer des premières ouvertures 46b et des secondes ouvertures 46a. Les premières colonnettes 41 ont leurs corps 41c qui traversent avec un premier jeu 411 positif et un second jeu 412 quasi nul les premières ouvertures 46b du support 16. Les secondes colonnettes 40 ont leurs corps 40c qui traversent avec un troisième jeu 403 les secondes ouvertures 46a du support 16.

Le premier jeu 411 est orienté dans au moins une première direction D1 radiale par rapport à l'axe d'allongement Y. Le second jeu 412 est orienté dans au moins une seconde direction D2 radiale par rapport à l'axe d'allongement Y, cette seconde direction D2 étant différente de la première direction D1. Les premier et second jeux 411, 412 sont configurés pour que le dispositif ait des amplitudes de déplacement différentes dans au moins deux directions distinctes perpendiculaires à l'axe principal X. Le troisième jeu 403 est différent des premier et second jeux 411, 412 des premières colonnettes 41 dans les premières ouvertures 46b. Le troisième jeu 403 est de préférence sensiblement supérieur aux premier et second jeux 411, 412 et est orienté selon la seconde direction D2 radiale par rapport à l'axe d'allongement Y. Les première et seconde directions D1, D2 perpendiculaires à l'axe X sont, de préférence, perpendiculaires entre elles. La première direction D1 et la seconde direction D2 peuvent être orientées tangentiellement ou de manière normale par rapport à une circonférence centrée sur l'axe principal X.

Dans l'exemple de réalisation de la figure 3, les premières colonnettes 41 sont alternées avec les secondes colonnettes 40 autour de l'axe principal X. On comprend qu'au moins une première colonnette 41 peut être comprise entre deux secondes colonnettes 40 autour de l'axe X et qu'au moins une seconde colonnette 40 peut être comprise entre deux premières colonnettes 41 autour de l'axe X. Autrement dit, le nombre de premières colonnettes 41 comprises entre deux secondes colonnettes 40 peut être différent de un. Le nombre de secondes colonnettes 40 comprises entre deux premières colonnettes 41 peut être différent de un également.

Avantageusement, les premières extrémités 40a, 41a des colonnettes 40, 41 ont en section une forme générale circulaire. Les secondes extrémités 40b, 41b ont également avantageusement en section une forme générale circulaire. Dans une autre forme de réalisation, non représentée, les premières extrémités 40a, 41a et les secondes extrémités 40b, 41b peuvent avoir en section une forme générale non circulaire, par exemple oblongue.

La bague 12 a en section axiale une forme générale en L et comprend une partie cylindrique 12b dont une extrémité axiale est reliée à une bride annulaire 12a radialement externe de fixation des colonnettes 40, 41.

La partie cylindrique 12b de la bague 12 comprend à sa périphérie interne une gorge annulaire 12c de roulement des billes du palier 14 et à sa périphérie externe une surface cylindrique externe 12d définissant avec le support 16 un espace annulaire de formation d'un film d'huile d'amortissement.

Le support 16 est partiellement représenté dans les dessins.

Le support 16 comprend une première paroi cylindrique 16b s'étendant autour de la partie cylindrique 12b de la bague 12 et comportant une surface cylindrique interne 16a définissant avec la surface 12d l'espace précité de formation du film d'huile d'amortissement.

Le support 16 comprend une seconde paroi cylindrique 16c s'étendant autour de la première paroi cylindrique 16b, voire également autour de la bride 12a de la bague 12. Les première et seconde parois cylindriques 16b, 16c sont reliées entre elles par la paroi annulaire 16d sensiblement radiale comportant les ouvertures 46a, 46b traversées par les corps 40c, 41c des colonnettes 40, 41. Dans l'exemple représenté, on remarque que les colonnettes 40, 41 traversent un espace annulaire formé entre les parois 16b, 16c. La paroi 16d est ici située plutôt à une extrémité axiale de cet espace. Le support 16 comprend en outre une bride annulaire 16e.

Avantageusement, les ouvertures 46a, 46b comprennent les premières ouvertures 46b qui ont en section transversale une forme générale oblongue ou en elliptique et les secondes ouvertures 46a qui ont en section transversale une forme générale circulaire. Les premières ouvertures 46b peuvent présenter une forme allongée, de préférence dans une même direction. Dans une autre forme de réalisation, non représentée, les premières ouvertures 46b peuvent avoir en section transversale une forme générale circulaire et les secondes ouvertures 46a peuvent avoir en section transversale une forme générale non circulaire, par exemple oblongue ou en elliptique. De la sorte, lorsque le corps 40c, 41c de forme non cylindrique, par exemple oblongue, d'une colonnette 40, 41 est engagé dans une des premières ouvertures 46b, de section transversale circulaire, la colonnette 40, 41 peut avoir un premier jeu positif et un deuxième jeu quasi nul tel que décrit précédemment. De la même manière, lorsque le corps 40c, 41c de forme non cylindrique, par exemple oblongue, d'une colonnette 40, 41 est engagé dans une des secondes ouvertures 46a, de section transversale non circulaire, par exemple oblongue, la colonnette 40, 41 peut avoir un troisième jeu sensiblement supérieur aux premier et deuxième jeux.

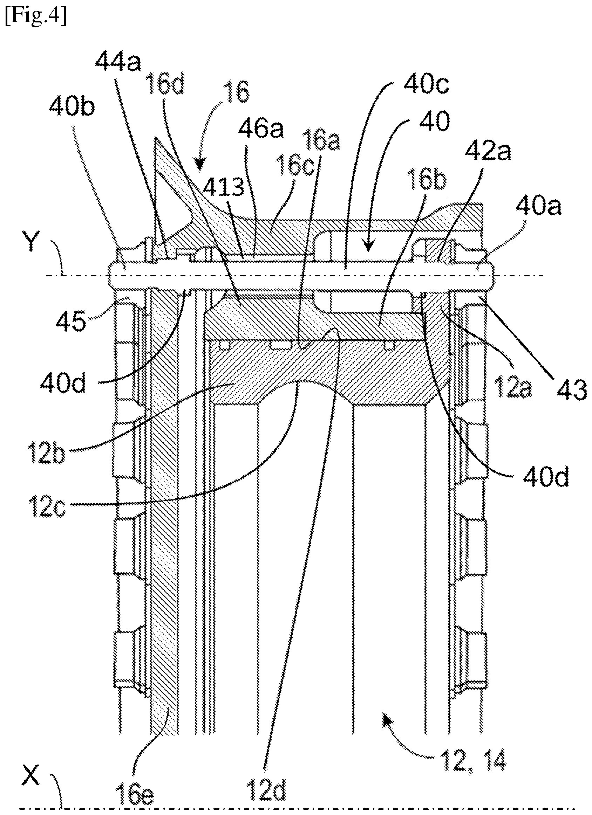

Les corps 40c des secondes colonnettes 40 peuvent traverser les secondes ouvertures 46a de la paroi annulaire 16d du support 16 avec un troisième jeu 403, comme représenté sur la figure 4 qui montre une vue en coupe axiale du dispositif selon l'axe de coupe I-I tracé sur la figure 3. Ce troisième jeu 403 est orienté dans toutes les directions radiales par rapport à l'axe Y. On comprend que les ouvertures 46a ont un diamètre supérieur au diamètre du corps 40c des secondes colonnettes 40.

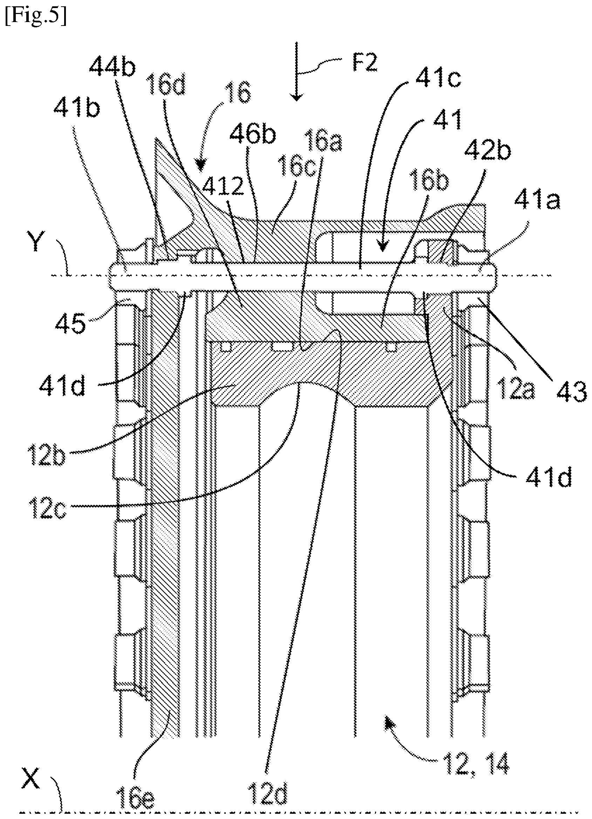

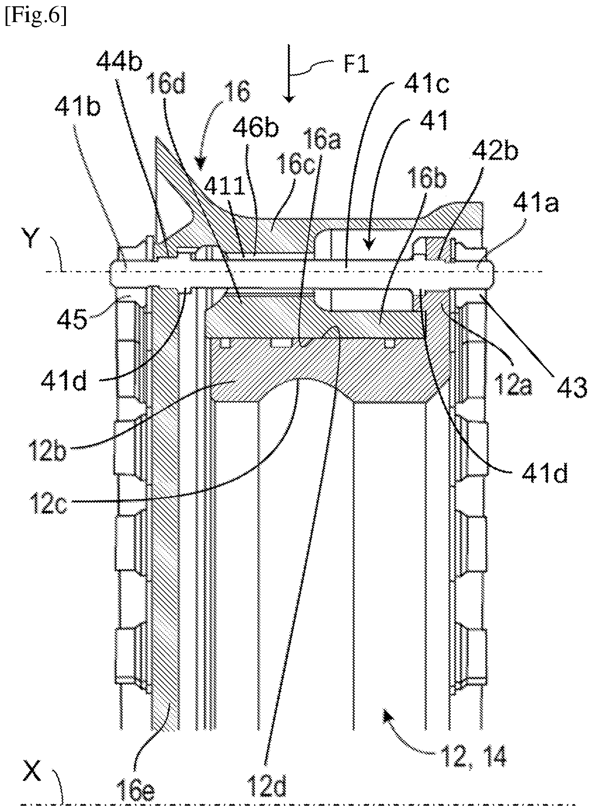

Les corps 41c des premières colonnettes 41 peuvent traverser les premières ouvertures 46b de la paroi annulaire 16d du support 16 avec un premier jeu 411 positif et un second jeu 412 quasi nul, comme représenté sur les figure 5 et 6 qui montrent respectivement une vue en coupe axiale du dispositif selon l'axe de coupe II-II et l'axe de coupe III-III tracés sur la figure 3. Le premier jeu 411 positif, visible sur la figure 6, est orienté dans une première direction D1 radiale par rapport à l'axe Y, cette première direction D1 étant elle-même orientée tangentiellement ou de manière normale par rapport à une circonférence centrée sur l'axe X. Le second jeu 412 quasi nul, visible sur la figure 5, est orienté dans une seconde direction radiale D2 par rapport à l'axe d'allongement Y, cette seconde direction D2 elle-même orientée tangentiellement ou de manière normale par rapport à une circonférence centrée sur l'axe X et étant différente de la première direction D1. On comprend que la forme allongée des premières ouvertures 46b implique que celles-ci ont une première dimension longitudinale plus grande qu'une seconde dimension, sensiblement perpendiculaire à la première dimension. On comprend également que la première dimension longitudinale est supérieure au diamètre du corps 41c des colonnettes 41, et que la seconde dimension est sensiblement égale au diamètre du corps 41c. Autrement dit, les premières colonnettes 41 peuvent se déplacer avec une certaine amplitude uniquement dans une direction longitudinale, correspondant à la première direction D1 et orientée tangentiellement ou de manière normale par rapport à une circonférence centrée sur l'axe X.

Les orifices 42a, 42b de la bague 12 et les orifices 44a, 44b du support 16 ont en section transversale une forme générale circulaire. De la sorte, les extrémités 40a, 40b des colonnettes 40, 41 peuvent être engagées sans jeu dans la bague 12 et dans le support 16, comme représenté sur les figures 4 à 6.

Les orifices 42a, 42b peuvent être ménagés dans la bride 12a. Les orifices 42a, sont traversés par les extrémités 40a des colonnettes 40 et les orifices 42b sont traversés par les extrémités 41a des colonnettes 41 ; ces extrémités 40a, 41a pouvant être filetées et recevoir des écrous 43 serrés contre la bride 12a.

Les orifices 44a, 44b peuvent être ménagés dans la bride 16e. Les orifices 44a, sont traversés par les extrémités 40b des colonnettes 40 et les orifices 44b sont traversés par les extrémités 41b des colonnettes 41 ; ces extrémités 40b, 41b pouvant être filetées et recevoir des écrous 45 serrés contre la bride 16e.

Le corps 40c, 41c de chaque colonnette 40, 41 peut être relié à chacune des extrémités 40a, 40b, 41a, 41b par des collerettes annulaires 40d, 41d. Les collerettes 40d, 41d peuvent comprendre un méplat pouvant être en appui respectivement sur les brides 16e, 12a du support 16 et de la bague 12, de la sorte, la rotation des colonnettes 40, 41 autour de leur axe longitudinal peut être empêchée.

Dans le cas de figure représenté à la figure 3, on comprend que la cage permet des amplitudes de déplacement des colonnettes 40, 41 qui est non axisymétrique. L'amplitude de déplacement permise par la cage dans une première sollicitation transversale (flèche F1) est plus importante que celle permise par la cage dans une seconde sollicitation (flèche F2) perpendiculaire à cette première sollicitation. Ainsi, la raideur de la cage sera plus faible avec la première sollicitation qu'avec la seconde. En effet, lorsque la cage est sollicitée avec la première sollicitation (flèche F1), toutes les colonnettes 40, 41 peuvent se déformer selon la direction de la première sollicitation (flèche F1) dans le jeu des ouvertures 46a, 46b sans que les corps 40c, 41c ne viennent en butée contre les parois internes des ouvertures 46a, 46b. Lorsque la cage est sollicitée avec la seconde sollicitation (flèche F2) perpendiculaire à la première sollicitation (flèche F1), l'effet de déformation permis par les jeux 403, orientés dans toutes les directions radiales, des secondes ouvertures 46a est diminué par la présence des seconds jeux 412 quasi nuls des premières ouvertures 46b dans une direction parallèle à la seconde sollicitation (flèche F2). Dans cette direction, les premières colonnettes 41 ne peuvent pas se déformer et butent contre les parois internes des premières ouvertures 46b.

L'invention concerne également une turbomachine d'aéronef comportant au moins un dispositif tel que décrit dans ce qui précède.

Le dispositif et la cage souple selon l'invention sont ainsi avantageux dans la mesure où la raideur de la cage est différente selon la position angulaire de l'effort transmis à la cage dans une direction transversale à son axe principal.

## Revendications

1. Dispositif de centrage et de guidage d'un arbre de turbomachine d'aéronef, ce dispositif comportant :
- une bague externe (12) d'un palier à roulement (14), cette bague s'étendant autour d'un axe principal (X) et comprenant des orifices (42a, 42b) disposés autour de cet axe et orientés parallèlement à cet axe,
- un support annulaire (16) de palier s'étendant autour de l'axe principal (X) et au moins en partie autour de la bague (12), ce support comprenant des orifices (44a, 44b) et des ouvertures (46a, 46b) disposés autour de cet axe et orientés parallèlement à cet axe, et
- une série de colonnettes (40, 41) de liaison de la bague au support, ces colonnettes étant réparties autour de l'axe principal (X) et ayant des axes d'allongement (Y) sensiblement parallèles à l'axe principal (X), chacune de ces colonnettes comportant un corps (40c, 41c) comprenant une première extrémité longitudinale (40a, 41a) engagée dans un des orifices (42a, 42b) de la bague et une seconde extrémité longitudinale (40b, 41b) engagée dans un des orifices (44a, 44b) du support, le corps de chacune desdites colonnettes traversant une des ouvertures (46a, 46b) du support,
**caractérisé en ce que** certaines desdites colonnettes (40, 41), appelées premières colonnettes (41), ont leurs corps (41c) qui traversent avec un premier jeu (411) positif et un second jeu (412) quasi nul des premières ouvertures (46b), ledit premier jeu (411) étant orienté dans au moins une première direction (D1) radiale par rapport audit axe d'allongement (Y), et ledit second jeu (412) étant orienté dans au moins une seconde direction (D2) radiale par rapport audit axe d'allongement (Y), différente de la première direction, lesdits premier et second jeux (411, 412) étant configurés pour que le dispositif ait des amplitudes de déplacement différentes dans au moins deux directions perpendiculaires audit axe principal.

2. Dispositif selon la revendication précédente, dans lequel lesdites première et seconde directions (D1, D2) sont perpendiculaires entre elles.

3. Dispositif selon l'une des revendications précédentes, dans lequel ladite première direction (D1) et ladite seconde direction (D2) sont orientées tangentiellement ou de manière normale par rapport à une circonférence centrée sur ledit axe principal (X).

4. Dispositif selon l'une des revendications précédentes, dans lequel d'autres colonnettes, appelées secondes colonnette (40) ont leurs corps (40c) qui traversent des secondes ouvertures (46a) avec un troisième jeu (403) orienté selon la seconde direction, ledit troisième jeu (403) étant différent, de préférence sensiblement supérieur, aux premier et second jeux (411, 412) des premières colonnettes (41) dans les premières ouvertures (46b).

5. Dispositif selon la revendication précédente, dans lequel lesdites premières colonnettes (41) sont alternées avec lesdites secondes colonnettes (40) autour dudit axe.

6. Dispositif selon l'une des revendications 4 ou 5, dans lequel les premières ouvertures (46b) ont en section une forme oblongue ou en elliptique et les secondes ouvertures (46a) ont en section une forme circulaire.

7. Dispositif selon la revendication précédente, dans lequel lesdites premières ouvertures (46b) sont orientées de façon à ce qu'elles présentent une forme allongée dans une même direction.

8. Dispositif selon l'une des revendications précédentes, dans lequel lesdits corps (40c, 41c) ont en section une forme générale cylindrique.

9. Dispositif selon l'une des revendications précédentes, dans lequel les ouvertures (46a, 46b) sont ménagées dans une paroi annulaire (16d) du support (16).

10. Dispositif selon l'une des revendications précédentes, dans lequel la bague externe (12) comprend une surface cylindrique externe (12d) définissant avec une surface cylindrique interne (16a) du support (16) un espace annulaire de formation d'un film d'huile d'amortissement.

11. Turbomachine d'aéronef, comportant au moins un dispositif selon l'une des revendications précédentes.

## Patentansprüche

1. Zentrier- und Führungsvorrichtung einer Flugfahrzeug-Turbotriebwerkswelle, wobei diese Vorrichtung beinhaltet:
- einen externen Dichtungsring (12) eines Wälzlagers (14), wobei dieser Dichtungsring sich um eine Hauptachse (X) herum erstreckt und Bohrungen (42a, 42b) umfasst, die um diese Achse herum angeordnet und parallel zu dieser Achse orientiert sind,
- eine ringförmige Lagerhalterung (16), die sich um die Hauptachse (X) und mindestens um den Dichtungsring (12) herum erstreckt, wobei diese Halterung Bohrungen (44a, 44b) und Öffnungen (46a, 46b) umfasst, die um diese Achse herum angeordnet und parallel zu dieser Achse orientiert sind, und
- eine Reihe von Säulen (40, 41) zur Verbindung des Dichtungsrings mit der Halterung, wobei diese Säulen um die Hauptachse (X) herum verteilt sind und Verlängerungsachsen (Y) aufweisen, die im Wesentlichen parallel zu der Hauptachse (X) sind, wobei jede der Säulen einen Körper (40c, 41c) beinhaltet, umfassend ein erstes Längsende (40a, 41a) im Eingriff mit einer der Bohrungen (42a, 42b) des Dichtungsrings und ein zweites Längsende (40b, 41b) im Eingriff mit einer der Bohrungen (44a, 44b) der Halterung, wobei der Körper von jeder der Säulen eine der Öffnungen (46a, 46b) der Halterung durchquert,
**dadurch gekennzeichnet, dass** gewisse der Säulen (40, 41), genannt erste Säulen (41), ihre Körper (41c) aufweisen, die die ersten Öffnungen mit einem ersten positiven Spielraum (411) und einem zweiten Spielraum (412) von quasi null durchqueren, wobei der erste Spielraum (411) in mindestens einer ersten radialen Richtung (D1) in Bezug auf die Verlängerungsachse (Y) orientiert ist und der zweite Spielraum (412) in mindestens einer zweiten radialen Richtung (D2), die sich von der ersten Richtung unterscheidet, in Bezug auf die Verlängerungsachse (Y) orientiert ist, wobei der erste und zweite Spielraum (411, 412) konfiguriert sind, damit die Vorrichtung Verschiebungsamplituden aufweist, die in mindestens zwei zur Hauptachse senkrechten Richtungen unterschiedlich sind.

2. Vorrichtung nach dem vorstehenden Anspruch, wobei die erste und zweite Richtung (D1, D2) untereinander senkrecht sind.

3. Vorrichtung nach einem der vorstehenden Ansprüche, wobei die erste Richtung (D1) und die zweite Richtung (D2) bezüglich eines auf der ersten Hauptachse (X) zentrierten Umfangs tangential oder normal orientiert sind.

4. Vorrichtung nach einem der vorstehenden Ansprüche, wobei andere Säulen, genannt zweite Säulen (40) ihre Körper (40c) aufweisen, die die zweiten Öffnungen (46a) mit einem dritten Spielraum (403) durchqueren, der gemäß der zweiten Richtung orientiert ist, wobei sich der dritte Spielraum (403) von dem ersten und zweiten Spielraum (411, 412) der ersten Säulen (41) in den ersten Öffnungen (46b) unterscheidet und vorzugsweise größer ist.

5. Vorrichtung nach dem vorstehenden Anspruch, wobei sich die ersten Säulen (41) mit den zweiten Säulen (40) um die Achse herum abwechseln.

6. Vorrichtung nach einem der Ansprüche 4 oder 5, wobei die ersten Öffnungen (46b) im Querschnitt eine längliche Form oder eine elliptische Form aufweisen und die zweiten Öffnungen (46a) im Querschnitt eine kreisförmige Form aufweisen.

7. Vorrichtung nach dem vorstehenden Anspruch, wobei die ersten Öffnungen (46b) derart orientiert sind, dass sie in einer gleichen Richtung eine langgestreckte Form präsentieren.

8. Vorrichtung nach einem der vorstehenden Ansprüche, wobei die Körper (40c, 41c) im Querschnitt eine allgemein zylindrische Form aufweisen.

9. Vorrichtung nach einem der vorstehenden Ansprüche, wobei die Öffnungen (46a, 46b) in einer ringförmigen Wand (16d) der Halterung (16) ausgebildet sind.

10. Vorrichtung nach einem der vorstehenden Ansprüche, wobei der externe Dichtungsring (12) eine externe zylindrische Oberfläche (12d) umfasst, die mit einer internen zylindrischen Oberfläche (16a) der Halterung (16) einen ringförmigen Raum zur Bildung eines Dämpfungsölfilms definiert.

11. Turbotriebwerk eines Luftfahrzeugs, das mindestens eine Vorrichtung nach einem der vorstehenden Ansprüche beinhaltet.

## Claims

1. A device for centring and guiding an aircraft turbine engine shaft, this device comprising:
- an outer ring (12) of a rolling bearing (14), this ring extending about a main axis (X) and comprising orifices (42a, 42b) arranged about this axis and oriented parallel to this axis,
- an annular bearing support (16) extending around the main axis (X) and at least partly around the ring (12), this support comprising orifices (44a, 44b) and openings (46a, 46b) arranged around this axis and oriented parallel to this axis, and
- a series of studs (40, 41) for connecting the ring to the support, these studs being distributed around the main axis (X) and having axes of elongation (Y) substantially parallel to the main axis (X), each of these studs comprising a body (40c, 41c) comprising a first longitudinal end (40a, 41a) engaged in one of the orifices (42a, 42b) of the ring and a second longitudinal end (40b, 41b) engaged in one of the orifices (44a, 44b) of the support, the body of each of said studs passing through one of the openings (46a, 46b) of the support,
**characterised in that** some of said studs (40, 41), referred to as first studs (41), have their bodies (41c) passing through first openings (46b) with a first positive clearance (411) and a second clearance (412) of almost zero, said first clearance (411) being oriented in at least a first direction (D1) radial with respect to said axis of elongation (Y), and said second clearance (412) being oriented in at least one second direction (D2) radial with respect to said axis of elongation (Y), different from the first direction, said first and second clearances (411, 412) being configured so that the device has different amplitudes of displacement in at least two directions perpendicular to said main axis.

2. The device according to the preceding claim, wherein said first and second directions (D1, D2) are perpendicular to each other.

3. The device according to one of the preceding claims, wherein said first direction (D1) and said second direction (D2) are oriented tangentially or normally with respect to a circumference centred on said main axis (X).

4. The device according to one of the preceding claims, wherein other studs, referred to as second studs (40), have their bodies (40c) passing through second openings (46a) with a third clearance (403) oriented in the second direction, said third clearance (403) being different from, preferably substantially greater than, the first and second clearances (411, 412) of the first studs (41) in the first openings (46b).

5. The device according to the preceding claim, wherein said first studs (41) alternate with said second studs (40) around said axis.

6. The device according to one of claims 4 or 5, wherein the first openings (46b) are oblong or elliptical in cross-section and the second openings (46a) are circular in cross-section.

7. The device according to the preceding claim, wherein said first openings (46b) are oriented so that they have an elongated shape in the same direction.

8. The device according to one of the preceding claims, wherein said bodies (40c, 41c) are generally cylindrical in cross-section.

9. The device according to one of the preceding claims, wherein the openings (46a, 46b) are provided in an annular wall (16d) of the support (16).

10. The device according to one of the preceding claims, wherein the outer ring (12) comprises an outer cylindrical surface (12d) defining with an inner cylindrical surface (16a) of the support (16) an annular space for forming a damping oil film.

11. An aircraft turbine engine, comprising at least one device according to one of the preceding claims.
